# EUROPEAN PATENT APPLICATION

(11) **EP 4 364 966 A1**
(43) Date of publication of application: **08.05.2024**
(21) Application number: 21948488.8
(22) Date of filing: 18.11.2021
(51) Int. Cl.: B60C 9/07, B60C 19/00

(54) **TIRE**

(30) Priority: 30.06.2021 JP 2021109738
(71) Applicant: BRIDGESTONE CORPORATION, Chuo-ku Tokyo 104-8340 (JP)
(72) Inventor: SHIMURA, Takashi, Tokyo 104-8340 (JP)
(74) Representative: Marks & Clerk LLP
(86) International application number: PCT/JP2021/042497
(87) International publication number: WO 2023/276185

(57) **Abstract**

A tire according to the present disclosure includes a carcass comprising a carcass body portion that extends toroidally between a pair of bead cores and a carcass foldback portion that extends from the carcass body portion and folds back around a perimeter of the bead cores from a tire width direction inner side to a tire width direction outer side, and a communication device embedded on the tire width direction outer side of the carcass foldback portion, wherein, when in a standard state in which the tire is fitted to an applicable rim, a prescribed internal pressure is applied, and no load is applied, a cord extension direction of the carcass foldback portion is inclined with respect to a tire radial direction when viewed in a tire width direction.

## Description

### TECHNICAL FIELD

The present disclosure relates to a tire.

### BACKGROUND

A configuration in which a communication device such as an RF tag is embedded in a tire is known. For example, Patent Literature (PTL) 1 describes a tire with an RF tag disposed on a sidewall portion of the tire.

### CITATION LIST

### Patent Literature

PTL 1: JP 2020-55450 A

### SUMMARY

### (Technical Problem)

With conventional tires, when a load is applied to a tire, a communication device installed therein may be damaged due to a load applied to the communication device. Therefore, there is still a need to improve the durability of the communication device disposed in the tire.

In view of these circumstances, it would be helpful to provide a tire that improves the durability of a communication device disposed in the tire.

### (Solution to Problem)

A tire according to the present disclosure includes a carcass comprising a carcass body portion that extends toroidally between a pair of bead cores and a carcass foldback portion that extends from the carcass body portion and folds back around a perimeter of the bead cores from a tire width direction inner side to a tire width direction outer side; and a communication device embedded on the tire width direction outer side of the carcass foldback portion, wherein, when in a standard state in which the tire is fitted to an applicable rim, a prescribed internal pressure is applied, and no load is applied, a cord extension direction of the carcass foldback portion is inclined with respect to a tire radial direction when viewed in a tire width direction.

### (Advantageous Effect)

According to the present disclosure a tire that improves the durability of a communication device disposed in the tire can be provided.

### BRIEF DESCRIPTION OF THE DRAWINGS

In the accompanying drawings:
FIG. 1 is a partial cross-sectional view, in a tire width direction, of a tire according to a first embodiment of the present disclosure;
FIG. 2 is a partial perspective view of an example of a carcass illustrated in FIG. 1;
FIG. 3 is a schematic view of the carcass illustrated in FIG. 2 as seen from a tire width direction outer side;
FIG. 4 is a partial perspective view of another example of the carcass illustrated in FIG. 1;
FIG. 5 is a schematic view of the carcass illustrated in FIG. 4 as seen from the tire width direction outer side;
FIG. 6 is a partial cross-sectional view, in a tire width direction, of a tire according to a second embodiment of the present disclosure;
FIG. 7 is a partial perspective view of an example of a carcass illustrated in FIG. 6; and
FIG. 8 is a schematic view of the carcass illustrated in FIG. 7 as seen from the tire width direction outer side.

### DETAILED DESCRIPTION

The following describes embodiments of a tire according to the present disclosure with reference to the drawings. Members and portions common to each drawing use the same reference numerals. Note, however, that the drawings are schematic and that the proportions of each dimension and the like may differ from those in reality.

In the present specification, "tire width direction" refers to a direction parallel to a rotation axis of the tire. "Tire radial direction" refers to a direction perpendicular to the rotation axis of the tire. "Tire circumferential direction" refers to a direction in which the tire rotates centered on the rotation axis of the tire. In the drawings, the tire width direction, the tire radial direction, and the tire circumferential direction are denoted as DW, DR, and DC, respectively.

Further, in the present specification, "tire radial direction inner side" refers to a side along the tire radial direction closer to the rotation axis of the tire, and "tire radial direction outer side" refers to a side along the tire radial direction farther from the rotation axis of the tire. On the other hand, "tire width direction inner side" refers to a side along the tire width direction closer to a tire equatorial plane, denoted as CL, and "tire width direction outer side" refers to a side along the tire width direction farther from the tire equatorial plane CL.

Unless otherwise noted, in the present specification, the positional relationship, etc. of each element of the tire is measured in a standard state. The "standard state" is a state in which the tire is fitted to an applicable rim, a prescribed internal pressure is applied, and no load is applied. The following describes a tire that has a cavity filled with air and is installed on a vehicle such as a passenger vehicle. However, the cavity of the tire may be filled with a fluid other than air, and the tire may be installed on a vehicle other than a passenger vehicle.

In the present specification, "applicable rim" (Measuring Rim in the STANDARDS MANUAL of ETRTO and Design Rim in the YEAR BOOK of TRA) refers to an approved rim of an applicable size as described by, or as described in the future by, valid industrial standards for the region in which a tire is produced or used, such as the JATMA YEAR BOOK of JATMA (the Japan Automobile Tyre Manufacturers Association) in Japan, the STANDARDS MANUAL of ETRTO (European Tyre and Rim Technical Organization) in Europe, and the YEAR BOOK of TRA (The Tire and Rim Association, Inc.) in the U.S. In a case in which a rim size is not described in the industrial standards, the "applicable rim" refers to a rim with a width corresponding to a bead width of the pneumatic tire. The "applicable rim" includes current sizes as well as sizes that will be included in the future in the above industrial standards. Examples of "sizes described in the future" may include sizes described in "FUTURE DEVELOPMENTS" in the 2013 edition of the STANDARDS MANUAL of ETRTO.

In the present specification, "prescribed internal pressure" refers to an air pressure (maximum air pressure) corresponding to the maximum load capability of a single wheel in an applicable size and ply rating as described in the JATMA YEAR BOOK or other industrial standards. In case of a size not described in the above industrial standard, the "prescribed internal pressure" refers to an air pressure (the maximum air pressure) corresponding to the maximum load capability prescribed for each vehicle on which the tire is installed. Furthermore, in the present specification, "prescribed load" refers to a load corresponding to the maximum load capability of a single wheel in an applicable size and ply rating as described in the above industrial standards. In case of a size not described in the above industrial standards, the "prescribed load" refers to a load corresponding to the maximum load capability prescribed for each vehicle on which the tire is installed.

### (First Embodiment)

The following describes a tire 1 according to the first embodiment of the present disclosure with reference to the drawings.

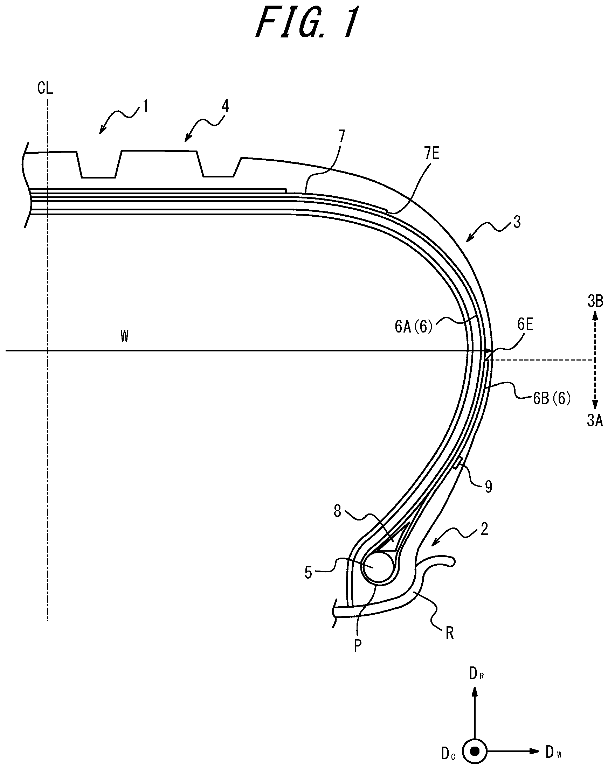

FIG. 1 is a partial cross-sectional view in the tire width direction, cut along the tire width direction, of the tire 1 in the first embodiment of the present disclosure. In FIG. 1, the tire 1 is illustrated in the standard state in which the tire 1 is fitted to rim R of a wheel that is an applicable rim, a prescribed internal pressure is applied, and no load is applied.

The tire 1 has a pair of bead portions 2, a pair of sidewall portions 3, and a tread portion 4. The sidewall portions 3 extend between the tread portion 4 and the bead portions 2. As described in detail below, a communication device 9 is embedded in a sidewall portion 3 of the tire 1.

The tire 1 described in the present embodiment has a symmetrical configuration with respect to the tire equatorial plane CL. However, the tire 1 may have an asymmetrical configuration with respect to the tire equatorial plane CL.

The tire 1 includes a pair of bead cores 5 arranged in the bead portions 2, a carcass 6 comprising one or more plies that extend toroidally between the pair of bead cores 5, and a belt 7 comprising one or more belt layers arranged on the tire radial direction outer side of a crown region of the carcass 6.

The bead cores 5 comprise annular cable beads that extend in the tire circumferential direction. The cross-sectional shape of faces that are perpendicular to an extension direction of the bead cores 5 (the cross-sectional shape in the tire width direction) is circular or approximately circular. However, the cross-sectional shape in the tire width direction of the bead cores 5 may be any shape, such as a square shape or a hexagonal shape. The cable beads are, for example, formed from high-carbon steel wire covered with rubber. A bead filler 8 formed from a rubber material, etc. is disposed on the tire radial direction outer side of the bead cores 5. However, the tire 1 may have a configuration that does not include the bead filler 8.

The carcass 6 is formed from one or more plies (one in the present embodiment) that extend toroidally between the pair of bead cores 5. The plies are formed from multiple cords covered with rubber. The cords that form the plies are, for example, organic fiber cords such as nylon cords. In the present embodiment, the cords are arranged to extend in the tire width direction in the tread portion 4. That is, the carcass 6 has a radial structure. The carcass 6 is fastened to the pair of bead cores 5. Specifically, the carcass 6 comprises a carcass body portion 6A that extends toroidally between the pair of bead cores 5, and a carcass foldback portion 6B that extends from the carcass body portion 6A and folds back around the bead core 5 from the tire width direction inner side to the tire width direction outer side.

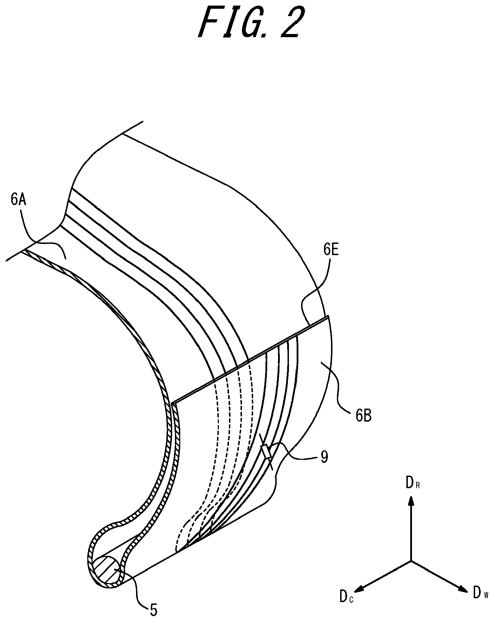

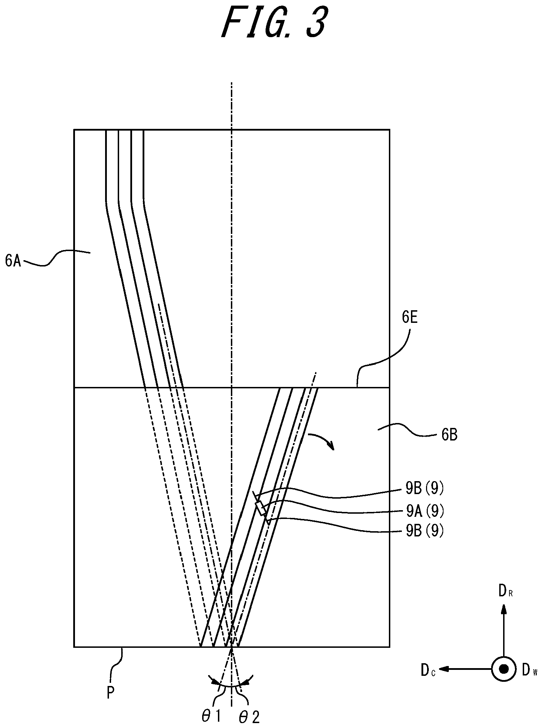

The structure of the carcass 6 is described in further detail with reference to FIG. 2 and FIG. 3. FIG. 2 is a partial perspective view of an example of the carcass 6 illustrated in FIG. 1. FIG. 3 is a schematic view of the carcass 6 illustrated in FIG. 2 as seen (viewed in the tire width direction) from the tire width direction outer side. FIG. 2 and FIG. 3 schematically illustrate an extension direction of the cords forming each of the carcass body portion 6A and the carcass foldback portion 6B. FIG. 2 and FIG. 3 illustrate a portion of the plurality of cords (four cords) for explanatory purposes, and do not limit the number of cords forming each of the carcass body portion 6A and the carcass foldback portion 6B.

As illustrated in FIG. 3, a cord extension direction of the carcass foldback portion 6B is inclined with respect to the tire radial direction when viewed in the tire width direction in the standard state. For example, the cord extension direction is evaluated in the direction in which the cord extends from the foldback position P of the carcass 6. The foldback position P of the carcass 6 is a position that is innermost in the carcass 6 in the tire radial direction. In the illustrated example, the cord extension direction of the carcass foldback portion 6B is inclined at an inclination Θ 1 with respect to the tire radial direction when viewed in the tire width direction in the standard state. As a result, for example, the application of a load, in the tire radial direction, to the tire 1 causes the carcass 6 to bend to the tire width direction outer side and causes the cords forming the carcass foldback portion 6B to bend in the tire circumferential direction (in the direction indicated by the arrow in FIG. 3) such that the inclination Θ 1 becomes larger. The cords forming the carcass foldback portion 6B bend in the tire circumferential direction, thereby supporting part of the load applied to the tire 1 and suppressing any out-of-plane deformation to the tire width direction outer side in the sidewall portion 3. Therefore, even if a load in the tire radial direction is applied to the tire 1, the communication device 9 embedded in the sidewall portion 3 of the tire 1 is less likely to be distorted, and the communication device 9 is less likely to be damaged.

The inclination Θ1 of the cord extension direction of the carcass foldback portion 6B with respect to the tire radial direction may be in the range of 3 degrees to 10 degrees, for example, when viewed in the tire width direction in the standard state. When a load in the tire radial direction is applied to the tire 1, and the inclination Θ 1 is small, the cords forming the carcass foldback portion 6B are less likely to bend in the tire circumferential direction, reducing the effect of suppressing any out-of-plane deformation to the tire width direction outer side in the sidewall portion 3. On the other hand, making the inclination Θ1 larger increases the weight and production cost of the tire 1 because the length of the cords forming the carcass foldback portion 6B becomes longer. Therefore, making the inclination Θ1 be in the range of 3 degrees to 10 degrees can suppress any out-of-plane deformation to the tire width direction outer side in the sidewall portion 3 while suppressing the increase in the weight and production cost of the tire 1. More preferably, the inclination Θ1 of the cord extension direction of the carcass foldback portion 6B with respect to the tire radial direction may be in the range of 5 degrees to 10 degrees when viewed in the tire width direction in the standard state.

Furthermore, in the example shown in FIG. 3, the cord extension direction of the carcass body portion 6A is inclined with respect to the tire radial direction when viewed in the tire width direction in the standard state. The cord extension direction of the carcass body portion 6A and the cord extension direction of the carcass foldback portion 6B are reversed in inclination across the tire radial direction. In the illustrated example, the cord extension direction of the carcass body portion 6A is inclined at an inclination Θ2 with respect to the tire radial direction, opposite to the cord extension direction of the carcass foldback portion 6B when viewed in the tire width direction in the standard state. Accordingly, any out-of-plane deformation to the tire width direction outer side in the sidewall portion 3, for example, can be further suppressed by causing the carcass body portion 6A and the carcass foldback portion 6B to bend in different directions in the tire circumferential direction when a load in the tire radial direction is applied to the tire 1. Thus, the communication device 9 embedded in the sidewall portion 3 of the tire 1 is less likely to be distorted, and the communication device 9 is even less likely to be damaged.

In the present embodiment, the size of the inclination Θ 1 of the cord extension direction of the carcass foldback portion 6B with respect to the tire radial direction and the size of the inclination Θ2 of the cord extension direction of the carcass body portion 6A with respect to the tire radial direction are approximately equal to each other. Accordingly, the bending of the carcass body portion 6A and the carcass foldback portion 6B in the tire circumferential direction can be equalized when a load in the tire radial direction is applied to the tire 1, further making any out-of-plane deformation less likely in the sidewall portion 3.

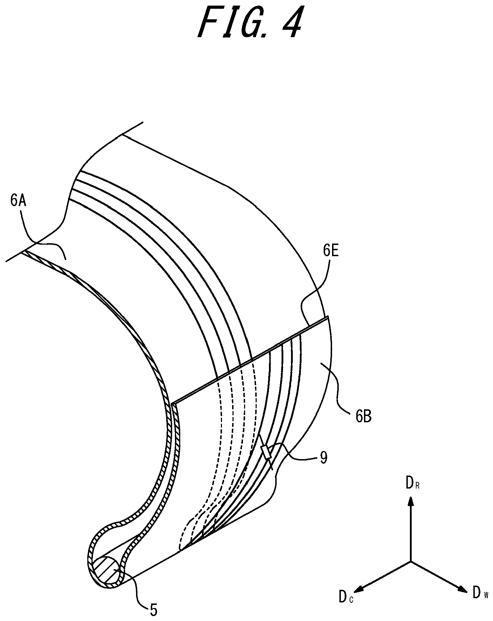

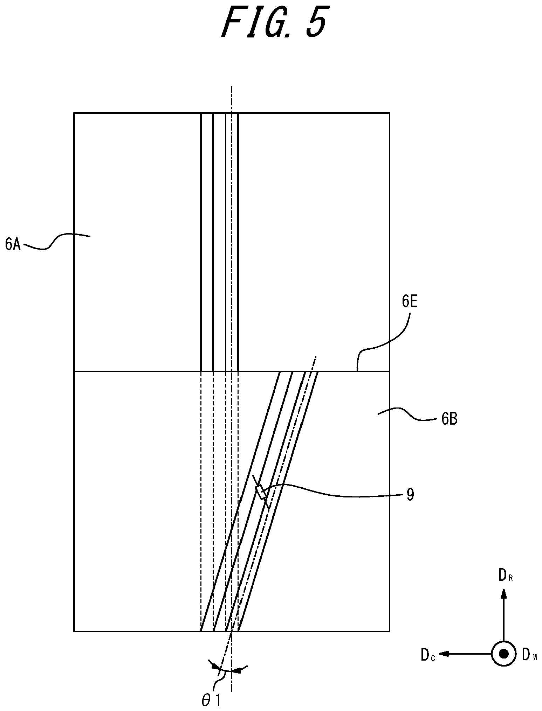

However, the size of the inclination Θ1 and the size of the inclination Θ2 may differ from each other. For example, as another example of the carcass 6, the cord extension direction of the carcass body portion 6A may be approximately parallel to the tire radial direction when viewed in the tire width direction in the standard state. Other examples of the carcass 6 are shown in FIG. 4 and FIG. 5. FIG. 4 is a partial perspective view of another example of the carcass 6 illustrated in FIG. 1. FIG. 5 is a schematic view of the carcass 6 illustrated in FIG. 4 as seen from the tire width direction outer side. In FIG. 5, the cords forming the carcass body portion 6A extend approximately parallel to the tire radial direction. This configuration, for example, makes the carcass body portion 6A more resistant to loads in the tire radial direction when a load in the tire radial direction is applied to the tire 1, and the carcass foldback portion 6B bending in the tire circumferential direction suppresses any out-of-plane deformation to the tire width direction outer side in the sidewall portion 3. FIG. 4 and FIG. 5 schematically illustrate the extension direction of the cords forming each of the carcass body portion 6A and the carcass foldback portion 6B. FIG. 4 and FIG. 5 illustrate a portion of the plurality of cords (four cords) for explanatory purposes, and do not limit the number of cords forming each of the carcass body portion 6A and the carcass foldback portion 6B.

Referring again to FIG. 1, in the present embodiment, an end 6E of a tire radial direction outer side of the carcass foldback portion 6B of the carcass 6 is positioned further to the tire width direction outer side than an end 7E of a tire width direction outer side of the belt 7 in the standard state. That is, the sidewall portion 3 includes, in the tire radial direction, an inner portion 3A, in which the carcass foldback portion 6B of the carcass 6 is arranged, and an outer portion 3B, in which the carcass foldback portion 6B of the carcass 6 is not arranged. The inner portion 3A of the sidewall portion 3 is more rigid than the outer portion 3B because of the arrangement of the carcass foldback portion 6B. Thus, for example, when a load in the tire radial direction is applied to tire 1, the difference in rigidity between the inner portion 3A and outer portion 3B of the sidewall portion 3 causes the outer portion 3B in the sidewall 3 to bend more easily and the inner portion 3A to bend less easily. Therefore, any out-of-plane deformation in the tire width direction in the inner portion 3A of the sidewall portion 3 is suppressed. Therefore, embedding the communication device 9 in the inner portion 3A of the sidewall portion 3, where the carcass foldback portion 6B is arranged, makes the communication device 9 less likely to be damaged.

More specifically, in the standard state, the end 6E of the tire radial direction outer side of the carcass foldback portion 6B of the carcass 6 may be positioned near a tire maximum width W. Here, the position of the "tire maximum width W" is a position for which a length, in the width direction, of the tire 1 is longest when the tire 1 is in a standard state, i.e., fitted to rim R of the wheel that is an applicable rim, a prescribed internal pressure is applied, and no load is applied. Embedding the communication device 9 further to the tire radial direction inner side than the position of the tire maximum width W in the sidewall portion 3 of the tire 1, makes it is less likely that obstacles such as curbstones or small stones will strike an outer surface of the position of the embedded communication device 9. Therefore, extending the carcass foldback portion 6B to near the position of the tire maximum width W can expand the range of options for places to arrange the communication device 9 while reducing the probability of damage to the communication device 9. For example, by moving the embedding position of the communication device 9 closer to the position of the tire maximum width W, other parts of the tire 1 are less likely to interfere with the communication of the communication device 9 when the communication device 9 communicates with electronic devices installed further to the tire width direction outer side than the communication device 9. Accordingly, the communication performance with respect to the tire radial direction of the communication device 9 can be improved. Here, "near" the tire maximum width W may be defined as up to 5% from the position of the tire maximum width W to the tire radial direction inner side or the tire radial direction outer side when the tire radial height from an end of the tire radial direction inner side to an end of the tire radial direction outer side for the tire 1 is 100%.

The belt 7 is arranged on the tire radial direction outer side of the crown region of carcass 6. The belt 7 is formed from one or more belt layers (two layers in the present embodiment) layered in the tire radial direction in the tire equatorial plane CL. The belt 7 is disposed so as to cover the carcass 6 on the tread portion 4 from the tire radial direction outer side. In the present specification, of the one or more belt layers, the belt layer having a length that is longest in the tire width direction is also referred to as a "maximum width belt layer". The end 7E of the tire width direction outer side of the maximum width belt layer of the belt 7 is also referred to simply as the end 7E of the tire width direction outer side of the belt 7. In the present embodiment, of the two belt layers, the belt layer of the tire radial direction inner side is the maximum width belt layer. However, the maximum width belt layer is not necessarily the belt layer that is innermost in the tire radial direction. When the belt 7 is formed from one belt layer, the maximum width belt layer refers to this one belt layer.

The communication device 9 is disposed in the tire 1.

The communication device 9 performs wireless communication. The communication device 9 is, for example, an RF (radio frequency) tag. The RF tag may also be referred to as an RFID (Radio Frequency Identification) tag. The communication device 9 includes an IC (integrated circuit) chip 9A, which forms a controller unit and a memory unit, and one or more antennas 9B connected to the IC chip 9A. The IC chip 9A may store any information relating to the tire 1, such as identification information and the date of manufacture of the tire 1. In the present embodiment, as illustrated in FIG. 3, the communication device 9 has two antennas 9B that extend in a straight line, in a wavy shape, or in a spiral shape and are disposed so as to extend in opposite directions to each other from the IC chip 9A, and the device as a whole has a longitudinal shape. However, the shape of the communication device 9 is not limited to the illustrated example. For example, the communication device 9 may have one antenna 9B disposed such as to extend from the IC chip 9A in a straight line, in a wavy shape, or in a spiral shape, and the device as a whole may have a longitudinal shape. Alternatively, the communication device 9 may have the IC chip 9A embedded inside one antenna 9B that extends in a spiral shape, and the device as a whole may have a longitudinal shape.

The IC chip 9A may be operated by a dielectric electromotive force generated by electromagnetic waves received by the one or more antennas 9B. That is, the communication device 9 may be a passive communication device. Alternatively, the communication device 9 may further include a battery and be able to communicate by generating electromagnetic waves with its own power. That is, the communication device 9 may be an active communication device.

Referring again to FIG. 1, the communication device 9 is embedded on the tire width direction outer side of the carcass foldback portion 6B. Accordingly, the carcass 6 is less likely to interfere with the communication of the communication device 9 when the communication device 9 communicates with an electronic device installed further to the tire width direction outer side than the communication device 9. As described above, the cord extension direction of the carcass foldback portion 6B is inclined with respect to the tire radial direction when viewed in the tire width direction in the standard state, which suppresses any out-of-plane deformation to the tire width direction outer side near the carcass foldback portion 6B when a load in the tire radial direction is applied to the tire 1. Therefore, the communication device 9 embedded on the tire width direction outer side of the carcass foldback portion 6B is less likely to be stretched in the tire radial direction. This is effective in improving the durability of the communication device 9 because damage to the communication device 9 is more likely to occur when the communication device 9 is stretched, causing tensile strain in the communication device 9. In the present embodiment, the communication device 9 is described as being completely embedded in the tire 1. However, the communication device 9 being embedded in the tire 1 can include at least a part of the communication device 9 being embedded in the tire 1.

In the present embodiment, a lengthways direction of the communication device 9 is inclined with respect to the cord extension direction of the carcass foldback portion 6B when viewed in the tire width direction in the standard state. Referring to FIG. 3, the communication device 9 includes the IC chip 9A and two antennas 9B disposed such as to extend in opposite directions to each other from the IC chip 9A. In the present embodiment, the two antennas 9B extend from the IC chip 9A in the lengthways direction of the communication device 9. Accordingly, as illustrated by the arrows in FIG. 3, a bending force is less likely to be applied to the communication device 9 when a load, in the tire radial direction is applied to the tire 1 causing the carcass foldback portion 6B to bend such that the inclination Θ 1 becomes larger in the tire circumferential direction. Thus, the communication device 9, which is embedded on the tire width direction outer side of the carcass foldback portion 6B, is even less likely to be damaged.

The communication device 9 has been described as being embedded on the tire width direction outer side of the carcass foldback portion 6B but is not limited to this example. For example, the communication device 9 may be embedded at a position between the carcass body portion 6A and the carcass foldback portion 6B in the tire width direction. Alternatively, the communication device 9 may be embedded at a position in the tire width direction outer side that is covered by both the carcass body portion 6A and the carcass foldback portion 6B. As noted above, damage to the communication device 9 is particularly likely to occur when tensile strain arises in the communication device 9. From this perspective, moving the embedding position of the communication device 9 in the sidewall portion 3 closer to the tire width direction inner side, which is less likely to be stretched in the tire radial direction when a radial load is applied to tire 1, is effective in improving the durability of the communication device 9.

When the communication device 9 is embedded at a position between the carcass body portion 6A and the carcass foldback portion 6B in the tire width direction, the lengthways direction of the communication device 9 may be inclined with respect to both the cord extension direction of the carcass body 6A and the cord extension direction of the carcass foldback portion 6B. Accordingly, a bending force is less likely to be applied to the communication device 9 when a load in the tire radial direction is applied to the tire 1 causing the carcass body portion 6A and the carcass foldback portion 6B to bend in the tire circumferential direction.

When the communication device 9 is embedded at a position at which the tire width direction outer side is covered by both the carcass body portion 6A and the carcass foldback portion 6B, the lengthways direction of the communication device 9 may be inclined with respect to the cord extension direction of the carcass body 6A. Accordingly, a bending force is less likely to be applied to the communication device 9 when a load in the tire radial direction is applied to the tire 1 causing the carcass body portion 6A to bend in the tire circumferential direction.

### (Second Embodiment)

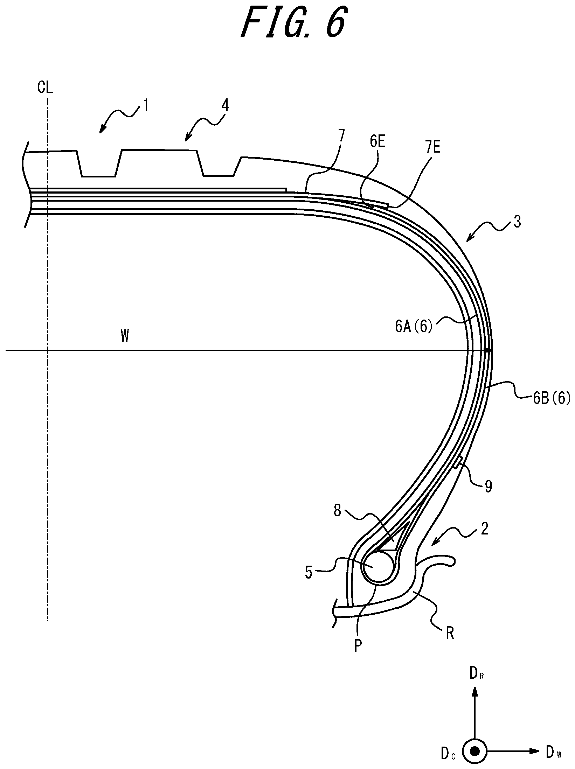

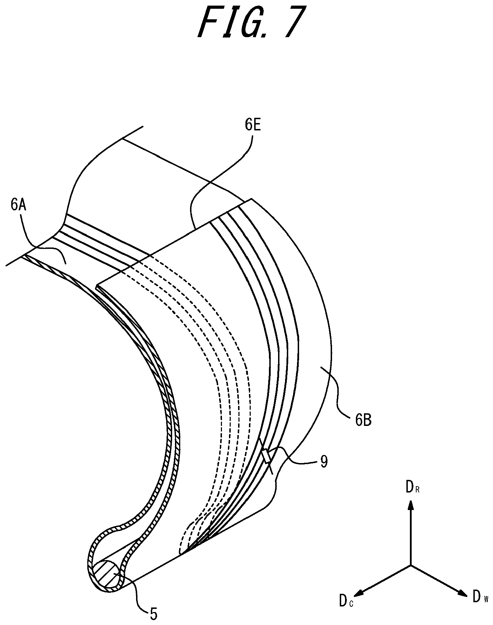

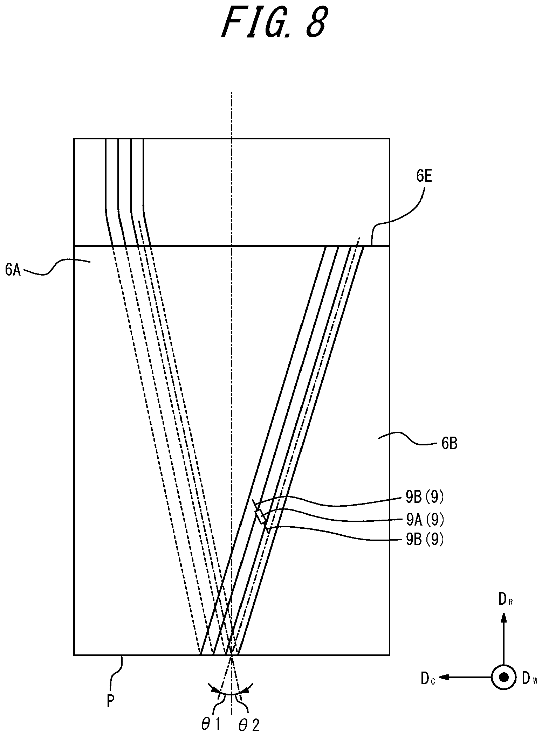

The following describes a tire 1 according to the second embodiment of the present disclosure with reference to FIG. 6, FIG. 7, and FIG. 8. FIG. 6 is a partial cross-sectional view in the tire width direction, cut along the tire width direction, of the tire 1 in the second embodiment of the present disclosure. FIG. 7 is a partial perspective view of an example of the carcass 6 illustrated in FIG. 6. FIG. 8 is a schematic view of the carcass 6 illustrated in FIG. 7 as seen from the tire width direction outer side. In FIG. 6, the tire 1 is illustrated in the standard state in which the tire 1 is fitted to rim R of a wheel that is an applicable rim, a prescribed internal pressure is applied, and no load is applied. FIG. 7 and FIG. 8 schematically illustrate the extension direction of the cords forming each of the carcass body portion 6A and the carcass foldback portion 6B. FIG. 7 and FIG. 8 illustrate a portion of the plurality of cords (four cords) for explanatory purposes, and do not limit the number of cords forming each of the carcass body portion 6A and the carcass foldback portion 6B.

As illustrated in FIG. 6, the position of the end 6E of the tire radial direction outer side of the carcass foldback portion 6B in the second embodiment is different from that in the first embodiment. The following describes the second embodiment, focusing on the differences from the first embodiment. Portions that have the same configuration as in the first embodiment use the same reference numerals.

In the second embodiment, as in the first embodiment, the communication device 9 is embedded in the sidewall portion 3 of the tire 1. More specifically, the communication device 9 is embedded on the tire width direction outer side of the carcass foldback portion 6B of the carcass 6. As illustrated in FIG. 7 and FIG. 8, as in the first embodiment, the cord extension direction of the carcass foldback portion 6B is inclined with respect to the tire radial direction when viewed in the tire width direction in the standard state.

Referring again to FIG. 6, in the second embodiment, the end 6E of the tire radial direction outer side of the carcass foldback portion 6B is positioned further to the tire width direction inner side than the end 7E of the tire width direction outer side of the belt 7. That is, an envelope structure is employed in the carcass 6. In the present embodiment, the end 6E of the carcass foldback portion 6B is positioned further to the tire radial direction outer side than the carcass body portion 6A and is positioned further to the tire radial direction inner side than the belt 7. Thus, the carcass foldback portion 6B extends entirely over the sidewall portion 3, which increases the rigidity of the sidewall portion 3 compared to a configuration in which the carcass foldback portion 6B terminates in the middle of the sidewall portion 3. Accordingly, any out-of-plane deformation to the tire width direction outer side in the sidewall portion 3 is less likely to occur when a load in the tire radial direction is applied to the tire 1. Further, by increasing the length of the carcass foldback portion 6B of the loads that are applied to the tire 1, the size of the load that can be supported by bending of the carcass foldback portion 6B in the tire circumferential direction increases, and any out-of-plane deformation to the tire width direction outer side in the sidewall portion 3 can be further suppressed.

In the present embodiment, the communication device 9 is arranged further to the tire radial direction inner side than the position of the tire maximum width W in the sidewall portion 3 in the standard state. This configuration makes it is less likely that obstacles such as curbstones or small stones strike the outer surface of the embedding position of the communication device 9 and can thereby reduce the probability of damage to the communication device 9. On the other hand, in the standard state, the communication device 9 may be arranged further to the tire radial direction outer side than the position of the tire maximum width W in the sidewall portion 3. This configuration makes it less likely that other parts of the tire 1 interfere with the communication of the communication device 9 when the communication device 9 communicates with electronic devices positioned further to the tire radial direction outer side than the tire 1, such as a road surface.

As in the first embodiment, the cord extension direction of the carcass body portion 6A, when viewed in the tire width direction in the standard state, may be inclined with respect to the tire radial direction or may be approximately parallel to the tire radial direction.

As described above, the tire 1 according to each embodiment of the present disclosure includes the carcass 6 comprising the carcass body portion 6A that extends toroidally between the pair of bead cores 5 and the carcass foldback portion 6B that extends from the carcass body portion 6A and folds back around the perimeter of the bead cores 5 from the tire width direction inner side to the tire width direction outer side, and the communication device 9 that is embedded on the tire width direction outer side of the carcass foldback portion 6B. The cord extension direction of the carcass foldback portion 6B is inclined with respect to the tire radial direction when viewed in the tire width direction in the standard state in which the tire 1 is fitted to a rim R that is an applicable rim, a prescribed internal pressure is applied, and no load is applied. When a load in the tire radial direction is applied to the tire 1, this configuration enables the cords forming the carcass foldback portion 6B to bend in the tire circumferential direction and can thereby suppress any out-of-plane deformation to the tire width direction outer side in the sidewall portion 3. Therefore, the communication device 9 embedded in the sidewall portion 3 of the tire 1 is less likely to be distorted, and the communication device 9 is less likely to be damaged. Therefore, the durability of the communication device 9 disposed in the tire 1 is improved.

In the tire 1 according to each embodiment of the present disclosure, the lengthways direction of the communication device 9 is preferably inclined with respect to the cord extension direction of the carcass foldback portion 6B when viewed in the tire width direction in the standard state. This configuration makes it less likely that a bending force is applied to the communication device 9 when a load in the tire radial direction is applied to the tire 1 causing the carcass foldback portion 6B to bend in the tire circumferential direction. Thus, the communication device 9, which is embedded on the tire width direction outer side of the carcass foldback portion 6B, is even less likely to be damaged.

In the tire 1 according to each embodiment of the present disclosure, the cord extension direction of the carcass body 6A is preferably inclined with respect to the tire radial direction when viewed in the tire width direction in the standard state. The cord extension direction of the carcass body portion 6A and the cord extension direction of the carcass foldback portion 6B are reversed in inclination across the tire radial direction. When a load in the tire radial direction is applied to the tire 1, this configuration enables the carcass body portion 6A and the carcass foldback portion 6B to bend in the tire circumferential direction and can thereby further suppress any out-of-plane deformation to the tire width direction outer side in the sidewall portion 3. As a result, the communication device 9 embedded in the sidewall portion 3 of the tire 1 is less likely to be distorted, and the communication device 9 is even less likely to be damaged.

In the tire 1 according to each embodiment of the present disclosure, the cord extension direction of the carcass foldback portion 6B is preferably inclined in a range from 3 degrees to 10 degrees with respect to the tire radial direction when viewed in the tire width direction in the standard state. Such a configuration can suppress any out-of-plane deformation to the tire width direction outer side in the sidewall portion 3 while suppressing an increase in the weight and production cost of the tire 1.

The tire 1 according to the first embodiment of the present disclosure further includes a belt 7 that is arranged on the tire radial direction outer side of the crown region of the carcass 6, and in the standard state, the end 6E of the tire radial direction outer side of the carcass foldback portion 6B is preferably positioned further to the tire width direction outer side than the end 7E of the tire width direction outer side of the belt 7. When a load in the tire radial direction is applied to tire 1, this configuration causes the sidewall portion 3 to bend more easily in the portion where the carcass foldback portion 6B is not arranged, and bend less easily in the portion, where the carcass foldback portion 6B is arranged. Accordingly, the communication device 9 that is embedded in the portion where the carcass foldback portion 6B is arranged in the sidewall portion 3 of the tire 1 is less likely to be damaged.

In the tire 1 according to the first embodiment of the present disclosure, the end 6E of the tire radial direction outer side of the carcass foldback portion 6B is preferably positioned near the position of the tire maximum width in the standard state. This configuration can expand the range of options for places in which to arrange the communication device 9 while reducing the probability of damage to the communication device 9.

The tire 1 according to the second embodiment of the present disclosure further includes a belt 7 that is arranged on the tire radial direction outer side of the crown region of the carcass 6, and, in the standard state, the end 6E of the tire radial direction outer side of the carcass foldback portion 6B is preferably positioned further to the tire width direction inner side than the end 7E of the tire width direction outer side of the belt 7. This configuration increases the rigidity of the sidewall portion 3 compared to a configuration in which the carcass foldback portion 6B terminates in the middle of the sidewall portion 3 and makes any out-of-plane deformation to the tire width direction outer side in the sidewall portion 3 less likely to occur when a load in the tire radial direction is applied to tire 1. Accordingly, the communication device 9 that is embedded in the sidewall portion 3 of the tire 1 is less likely to be damaged.

Note that although the tire according to the present disclosure has been described based on the drawings and embodiments, a person skilled in the art can make various variations and modifications based on the present disclosure. Thus, these variations and modifications are included in the scope of the present disclosure. For example, the configuration or functions, etc. included in each embodiment can be re-arranged so as not to be logically inconsistent. The configuration or functions, etc. included in each embodiment can be used in combination with other embodiments, and multiple configurations or functions, etc. can be combined into one, divided, or partially omitted.

### REFERENCE SIGNS LIST

1: tire, 2: bead portion, 3: sidewall portion, 3A: (tire radial direction) inner portion, 3B: (tire radial direction) outer portion, 4: tread portion, 5: bead core, 6: carcass, 6A: carcass body portion, 6B: carcass foldback portion, 6E: end of tire width direction outer side of carcass, 7: belt, 7E: end of tire width direction outer side of belt, 8: bead filler, 9: communication device, 9A: IC chip, 9B: antenna, R: rim, CL: tire equatorial plane, W: tire maximum width, P: foldback position of carcass, Θ 1: inclination, Θ2: inclination

## Claims

1. A tire comprising:
a carcass comprising a carcass body portion that extends toroidally between a pair of bead cores and a carcass foldback portion that extends from the carcass body portion and folds back around a perimeter of the bead cores from a tire width direction inner side to a tire width direction outer side; and
a communication device embedded on the tire width direction outer side of the carcass foldback portion,
wherein, when in a standard state in which the tire is fitted to an applicable rim, a prescribed internal pressure is applied, and no load is applied, a cord extension direction of the carcass foldback portion is inclined with respect to a tire radial direction when viewed in a tire width direction.

2. The tire according to claim 1, wherein a lengthways direction of the communication device is inclined with respect to the cord extension direction of the carcass foldback portion when viewed in the tire width direction in the standard state.

3. The tire according to claim 1 or 2, wherein a cord extension direction of the carcass body portion is inclined with respect to the tire radial direction when viewed in the tire width direction in the standard state, and
the cord extension direction of the carcass body portion and the cord extension direction of the carcass foldback portion are reversed in inclination across the tire radial direction.

4. The tire according to any one of claims 1 to 3, wherein the cord extension direction of the carcass foldback portion is inclined in a range from 3 degrees to 10 degrees with respect to the tire radial direction when viewed in the tire width direction in the standard state.

5. The tire according to any one of claims 1 to 4, further comprising a belt arranged on a tire radial direction outer side of a crown region of the carcass,
wherein, in the standard state, an end of the tire radial direction outer side of the carcass foldback portion is positioned further to the tire width direction outer side than an end of a tire width direction outer side of the belt.

6. The tire according to claim 5, wherein, in the standard state, the end of the tire radial direction outer side of the carcass foldback portion is positioned near a position of a tire maximum width.

7. The tire according to any one of claims 1 to 4, further comprising a belt arranged on a tire radial direction outer side of a crown region of the carcass,
wherein, in the standard state, an end of the tire radial direction outer side of the carcass foldback portion is positioned further to the tire width direction inner side than an end of a tire width direction outer side of the belt.
